# EUROPÄISCHE PATENTSCHRIFT

(11) **EP 2 242 024 B1**
(45) Veröffentlichungstag und Bekanntmachung des Hinweises auf die Patenterteilung: **25.02.2015**
(21) Anmeldenummer: 09450078.2
(22) Anmeldetag: 14.04.2009
(51) Int. Cl.: G07B 15/06

(54) **Verfahren, Komponenten und Systeme zum Erzeugen von Mauttransaktionen**
Method, components and systems for creating toll transactions
Procédé, composants et systèmes de production de transactions de péage

(43) Veröffentlichungstag der Anmeldung: 20.10.2010
(73) Patentinhaber: Kapsch TrafficCom AG, 1120 Wien (AT)
(72) Erfinder: Kersten, Jan, 71570 Oppenweiler (DE); Nagy, Oliver, 1190 Wien (AT); Scheiber, Herbert, 9020 Klagenfurt (AT); Schrödl, Sören, A-2340 Mödling (AT); Tijink, Jasja, 2380 Perchtoldsdorf (AT)
(74) Vertreter: Weiser, Andreas

(56) Entgegenhaltungen:
- EP-A- 1 089 088
- EP-A- 1 333 405
- EP-A- 1 457 928
- US-A- 5 490 079
- US-A1- 2005 216 187

## Beschreibung

Die vorliegende Erfindung betrifft ein Verfahren zum Erzeugen von Mauttransaktionen in einem Straßenmautsystem, das zumindest ein erstes Subsystem zur mauttransaktionserzeugenden Verortung von Fahrzeuggeräten mittels globaler Satellitennavigation und zumindest ein zweites Subsystem zur mauttransaktionserzeugenden Verortung von Fahrzeuggeräten mittels lokaler Vermautungsstellen aufweist, wobei zumindest einige Fahrzeuggeräte mit beiden Subsystemen zusammenwirken können und die Subsysteme ihre Mauttransaktionen an eine gemeinsame Zentrale zur Verarbeitung senden. Die Erfindung betrifft ferner ein Straßenmautsystem dieser Art, eine Zentrale, einen Proxy und ein Fahrzeuggerät für ein solches Straßenmautsystem.

Fahrzeuggeräte (onboard units, OBUs), welche mit Mautsystemen unterschiedlicher Technologien zusammenarbeiten können, z.B. globalen Satellitennavigationssystemen (global navigation satellite systems, GNSS) einerseits und lokalen Kurzreichweiten-Funkbaken (dedicated short range communication beacons, DSRC-Baken) anderseits, werden auch als "Hybrid-OBUs" bezeichnet. Aufgrund der fortschreitenden Integration unterschiedlicher Mautsysteme mittels neuer systemübergreifender Auswertungszentralen werden Hybrid-OBUs in zunehmendem Maße eingesetzt.

Dies kann zu Problemen führen, wenn sich die geographischen Abdeckungsgebiete der Mautsysteme überlappen, weil Hybrid-OBUs in den Überlappungsgebieten doppelte Mauttransaktionen verursachen können. Derzeit müssen solche doppelten Mauttransaktionen in der Zentrale herausgefiltert werden, was einen beträchtlichen Aufwand darstellt, weil dazu jede Mauttransaktion auf Doppel überprüft werden muß.

Aus der US 2005/0216187 Al ist es für ausschließlich in GNSS-Straßenmautsystemen funktionierende OBUs bekannt, bei Ausfall des Satellitennavigationssignales hilfsweise die Zellkennung (Cell-ID) des zellularen Mobilfunknetzes (GSM), über welches die OBU ihre Standortmeldungen absetzt, zur Lokalisierung heranzuziehen, bis das Satellitennavigations-Subsystem wieder operativ ist.

Die Erfindung setzt sich zum Ziel, Verfahren und Komponenten für Straßenmautsysteme zu schaffen, welche die genannten Nachteile des Standes der Technik überwinden.

Dieses Ziel wird in einem ersten Aspekt der Erfindung mit einem Verfahren der einleitend genannten Art zum Erzeugen von Mauttransaktionen in einem Straßenmautsystem erreicht, welches Verfahren sich dadurch auszeichnet, daß das erste Subsystem für Straßensegmente, welche das zweite Subsystem bei seiner Mauttransaktionserzeugung berücksichtigt, keine Mauttransaktionen erzeugt. Dadurch wird die Erzeugung von doppelten Mauttransaktionen von Hybrid-OBUs bereits im Ansatz unterdrückt, sodaß in der Zentrale kein Filtervorgang für alle einlangenden Mauttransaktionen mehr erforderlich ist. Darüber hinaus wird das Verkehrsaufkommen in der Datenübertragung zwischen den Subsystemen und der Zentrale signifikant reduziert.

Gemäß einer ersten vorteilhaften Ausführungsform der Erfindung wird dies insbesondere dadurch erreicht, daß zu seiner Mauttransaktionserzeugung das erste Subsystem eine erste Geodatenbank und das zweite Subsystem eine zweite Geodatenbank von mautpflichtigen Straßensegmenten verwendet, wobei die erste Geodatenbank nur solche mautpflichtigen Straßensegmente enthält, welche in der zweiten Geodatenbank nicht vorkommen.

Alternativ kann dies ebenso vorteilhaft dadurch erreicht werden, daß das erste Subsystem und das zweite Subsystem zur Mauttransaktionserzeugung eine gemeinsame Geodatenbank von mautpflichtigen Straßensegmenten verwenden, in der zu jedem Straßensegment zumindest ein Flag gespeichert wird, welches die Verfügbarkeit einer lokalen Vermautungsstelle hiefür anzeigt, wobei das erste Subsystem nur dann Mauttransaktionen für Fahrzeuggeräte auf einem Straßensegment erzeugt, wenn dessen Flag in der Geodatenbank nicht gesetzt ist. Beide Varianten beruhen auf der Erkenntnis, daß in besonders einfacher Weise systemweite Geodatenbanken, welche Definitionen der mautpflichtigen Straßensegmente enthalten, dazu eingesetzt werden können, Doppeltransaktionen durch entsprechende Segmentfestlegungen zu verhindern.

In einem zweiten Aspekt werden die Ziele der Erfindung mit einem Straßenmautsystem erreicht, mit zumindest einem ersten Subsystem zur mauttransaktionserzeugenden Verortung von Fahrzeuggeräten mittels globaler Satellitennavigation und zumindest einem zweiten Subsystem zur mauttransaktionserzeugenden Verortung von Fahrzeuggeräten mittels lokaler Vermautungsstellen, wobei zumindest einige Fahrzeuggeräte mit beiden Subsystemen zusammenwirken können und die Subsysteme an eine gemeinsame mauttransaktionsverarbeitende Zentrale angeschlossen sind, welches sich dadurch auszeichnet, daß das erste Subsystem für Straßensegmente, welche das zweite Subsystem bei seiner Mauttransaktionserzeugung berücksichtigt, keine Mauttransaktionen erzeugt. Hinsichtlich der Vorteile und weiteren Merkmale des Straßenmautsystems wird auf die obigen Ausführungen zum Verfahren verwiesen.

Besonders vorteilhaft ist es, wenn die genannte(n) Geodatenbank(en) in der gemeinsamen Zentrale des Straßenmautsystems gehalten und von dort an die einzelnen Subsysteme verteilt wird bzw. werden. Demgemäß schafft die Erfindung in einem dritten Aspekt auch eine Zentrale, welche derartige modifizierte Geodatenbanken enthält, und zwar entweder die genannten ersten und zweiten Geodatenbanken oder die genannte gemeinsame Geodatenbank.

Die Subsysteme enthalten in der Regel, z.B. nach dem neuen ISO-Standard 17575, jeweils einen zentralen Proxyrechner, kurz "Proxy" genannt, der - je nach Variante des Subsystems - entweder selbst Mauttransaktionen durch Zuordnen von Ortsmeldungen sog. "thin client"-OBUs zu mautpflichtigen Straßensegmenten erzeugt oder fertige Mauttransaktionen von sog. "thick client"-OBUs erhält, welche diese Zuordnung autark vornehmen. Für die erste Subsystemvariante schafft die Erfindung in einem weiteren Aspekt einen Proxy für das erste Subsystem, enthaltend die gemeinsame bzw. die erste Geodatenbank zur mauttransaktionserzeugenden Verortung von ortsmeldenden Fahrzeuggeräten, wobei der Proxy nur dann eine Mauttransaktion für ein Straßensegment erzeugt und an die Zentrale sendet, wenn dieses Straßensegment in der ersten Geodatenbank enthalten oder in der gemeinsamen Geodatenbank mit keinem Flag versehen ist.

Für die zweite Subsystemvariante schafft die Erfindung alternativ einen Proxy für das erste Subsystem, enthaltend zumindest die gemeinsame oder die erste Geodatenbank zur Verteilung dieser Geodatenbank an mauttransaktionserzeugende Fahrzeuggeräte, sowie in noch einem weiteren Aspekt eine damit zusammenwirkende "thick client"-OBU, d.h. ein Fahrzeuggerät enthaltend zumindest die gemeinsame oder die erste Geodatenbank, welches nur dann eine Mauttransaktion für ein Straßensegment erzeugt und an die Zentrale sendet, wenn dieses Straßensegment in der ersten Geodatenbank enthalten oder in der gemeinsamen Geodatenbank mit keinem Flag versehen ist.

Weitere Merkmale und Vorteile der Erfindung ergeben sich aus der nachfolgenden Beschreibung eines bevorzugten Ausführungsbeispiels unter Bezugnahme auf die begleitenden Zeichnungen, in denen zeigt:
Fig. 1 schematisch den physischen Aufbau eines Straßenmautsystems mit Hybrid-OBUs;
Fig. 2 den logischen Aufbau des Straßenmautsystems von Fig. 1 in Blockschaltbildform; und
Fig. 3 den Aufbau der im Rahmen der Erfindung verwendeten Geodatenbanken.

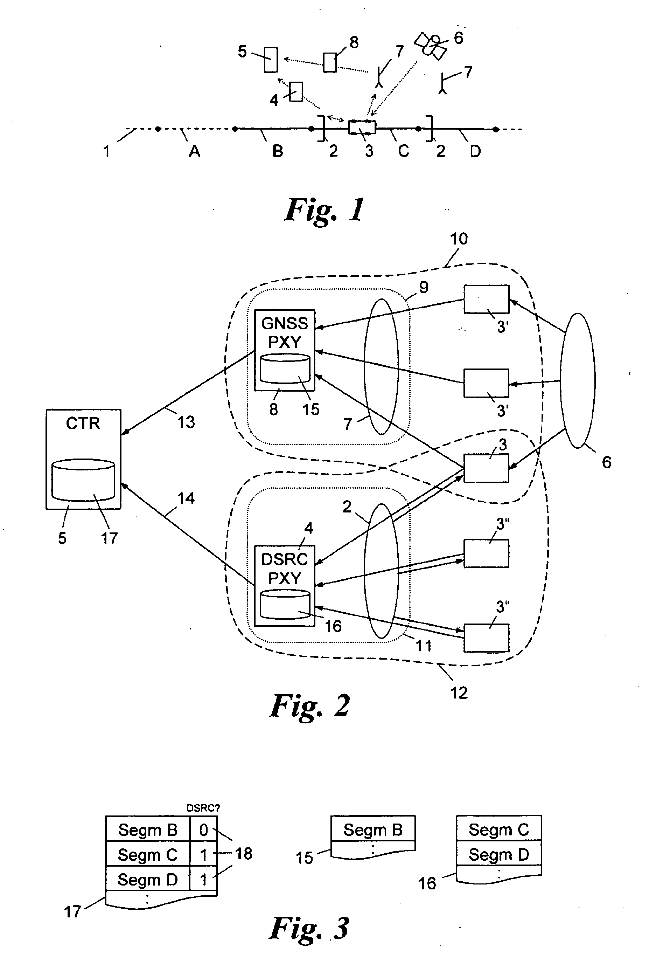

Fig. 1 zeigt einen Abschnitt eines Straßennetzes 1 mit vier beispielhaften Straßensegmenten A, B, C und D. Drei dieser Straßensegmente sind mautpflichtig (mit durchgezogenen Linien dargestellt), und zwar die Straßensegmente B, C, D. Von diesen sind wiederum zwei Straßensegmente C und D jeweils mit einer lokalen Vermautungsstelle 2 versehen, u.zw. im gezeigten Beispiel mit DSRC-Baken.

Ein auf einem Fahrzeug montiertes Fahrzeuggerät 3 (onboard unit, OBU) ist mit einem DSRC-Transponder ausgestattet und kommuniziert gerade mit der Vermautungsstelle 2, um eine Mauttransaktion (Mautdatensatz) zu erzeugen, welcher über einen Proxy 4 an eine Zentrale 5 zur Verarbeitung gesandt wird, wie später noch ausführlicher erläutert wird.

Das Fahrzeuggerät 3 ist darüber hinaus eine sog. "Hybrid-OBU", welche nicht nur einen DSRC-Transponder zur Kommunikation mit DSRC-Baken hat, sondern auch selbst seinen Ort in einem globalen Satellitennavigationssystem 6 bestimmen und auf Grundlage dessen eine Mauttransaktion über ein Mobilfunknetz 7 und einen Proxy 8 an die Zentrale 5 absetzen kann.

Fig. 2 zeigt die logisch-geographische Aufteilung des Systems von Fig. 1. Das Mobilfunksystem 7 mit seinem Proxy 8 bildet ein erstes Subsystem 9 für damit zusammenwirkende Fahrzeuggeräte 3, 3' (zusammen erstes "front end"), dessen geographischer Abdeckungsbereich mit 10 versinnbildlicht ist. Demgegenüber bilden die lokalen Vermautungsstellen 2 und ihr Proxy 4 ein zweites Subsystem 11 für damit zusammenwirkende Fahrzeuggeräte 3, 3" (zusammen zweites "front end"), dessen geographischer Abdeckungsbereich mit 12 veranschaulicht ist. Wie ersichtlich, kann das hybride Fahrzeuggerät 3 mit beiden Subsysteme 9, 11 zusammenwirken.

Die Subsysteme 9, 11 erzeugen jeweils Mauttransaktionen 13, 14 für die gemeinsame Zentrale 5, und zwar jeweils durch Zuordnung der durch die lokalen Vermautungsstellen 2 oder das Satellitennavigationssystem 6 bestimmten Orte der Fahrzeuggeräte 3, 3', 3" zu den mautpflichtigen Straßensegmenten B, C, D, die in Geodatenbanken 15, 16 der Subsysteme 9, 11 gespeichert sind. Die Geodatenbank 16 des DSRC-Subsystems 11 enthält jene mautpflichtigen Straßensegmente C, D, welche mittels des Subsystems 11 vermautbar sind, und die Geodatenbank 15 des GNSS-Subsystems 9 alle anderen mautpflichtigen Straßensegmente mit Ausnahme der Straßensegmente der Geodatenbank 16. Dadurch wird verhindert, daß das erste Subsystem 9 Mauttransaktionen 13 für hybride Fahrzeuggeräte 3 erzeugt, für welche bereits das zweite Subsystem 11 Mauttransaktionen 14 erzeugt und an die Zentrale 5 sendet.

Die Geodatenbanken 15, 16 der Subsysteme 9, 11 können gesondert aufgebaut und den Subsystemen 9, 11 bereitgestellt werden, siehe Fig. 3. Bevorzugt werden sie jedoch aus einer gemeinsamen Geodatenbank 17 abgeleitet, welche in der Zentrale 5 gehalten wird und alle mautpflichtigen Straßensegmente B, C, D enthält, jeweils ergänzt um eine Kennung bzw. ein Flag 18, welches die dafür verfügbare Mauttechnologie angibt. In dem in Fig. 3 gezeigten Beispiel gibt das Flag 18 die Vermautbarkeit eines Straßensegments im DSRC-Subsystem 11 an. Mit Hilfe des Flags 18 kann die gemeinsame Geodatenbank 17 z.B. in die zwei gesonderten Geodatenbanken 15, 16 der Subsysteme 9, 11 aufgeteilt und an diese zur lokalen Anwendung verteilt werden.

Alternativ könnte die gemeinsame Geodatenbank 17 auch von der Zentrale 5 systemweit bereitgestellt werden und die Subsysteme 9, 11 konsultieren bei jeder Mauttransaktionserzeugung die gemeinsame Geodatenbank 17.

Eine weitere Alternative besteht darin, daß die Subsysteme 9, 11 vollständige Kopien der gemeinsamen Geodatenbank 17 erhalten und jeweils nur jene mautpflichtigen Straßensegmente zur Mauttransaktionserzeugung verwenden, welche sie betreffen. In diesem Falle erzeugt das GNSS-Subsystem 9 nur dann Mauttransaktionen 13 für ein hybrides Fahrzeuggerät 3 auf einem Straßensegment B, C, D, wenn dessen Flag 18 in der gemeinsamen Geodatenbank 17 nicht gesetzt ist, wie hier das Straßensegment B.

Wie bereits erörtert, kann im GNSS-Subsystem 9 die Zuordnung eines mittels Satellitennavigation bestimmten Orts zu einem Straßensegment ("map maching") von einem als "thick client"-OBU ausgeführten Fahrzeuggerät 3, 3' selbst durchgeführt werden, wenn dieses eine eigene Kopie der Geodatenbank 15 oder 17 erhalten hat; oder alternativ vom Proxy 8, wenn die Fahrzeuggeräte 3, 3' als "thin client"-OBUs ausgeführt sind.

Im DSRC-Subsystem 11 ist die Verortung einfacher, da die Vermautungsstellen 2 einen vordefinierten Ort haben, der unmittelbar einem Straßensegment in der Geodatenbank 16 oder 17 zugeordnet werden kann.

In diesem Sinne kann die zweite Geodatenbank 16 (bzw. ihr Anteil an der gemeinsamen Geodatenbank 17) z.B. auch einfach nur durch eine Standortliste aller lokalen Vermautungsstellen 2 des DSRC-Subsystems 11 gebildet sein, welche das DSRC-Subsystem 11 bei seiner Mauttransaktionserzeugung - sei es auch nur implizit - verwendet bzw. sich darauf stützt.

Die Erfindung ist nicht auf die dargestellten Ausführungsformen beschränkt, sondern umfaßt alle Varianten und Modifikationen, die in den Rahmen der angeschlossenen Ansprüche fallen. So können beispielsweise die lokalen Vermautungsstellen 2 auch auf andere Weise als durch die dargestellten DSRC-Baken gebildet sein, z.B. in Form von Benutzerterminals bemannter Mautstationen, in Form von Zutrittsschranken usw. Auch das Mobilfunksystem 7 des GNSS-Subsystems 9 kann beliebiger Natur sein, z.B. eine paketvermittelte Datenverbindung in einem GPRS- oder UMTS-Netz usw. Schließlich ist auch der Begriff "Straßensegment" in seiner allgemeinsten Form aufzufassen und umfaßt nicht nur befahrbare Straßenzüge, sondern z.B. auch Parkflächen, deren Benutzung zeitmautpflichtig ist.

## Patentansprüche

1. Verfahren zum Erzeugen von Mauttransaktionen (13, 14) in einem Straßenmautsystem, das zumindest ein erstes ein Mobilfunksystem (7) umfassendes Subsystem (9) zur erste Mauttransaktionen erzeugenden Verortung von Fahrzeuggeräten (3, 3') mittels globaler Satellitennavigation (6) und zumindest ein zweites lokale Vermautungsstellen (2) umfassendes Subsystem (11) zur zweite Mauttransaktionen erzeugenden Verortung von Fahrzeuggeräten (3, 3") mittels dieser lokalen Vermautungsstellen (2) aufweist, wobei zumindest einige Fahrzeuggeräte (3) mit beiden Subsystemen (9, 11) zusammenwirken können und die Subsysteme (9, 11) ihre Mauttransaktionen (13, 14) an eine gemeinsame Zentrale (5) zur Verarbeitung senden, **dadurch gekennzeichnet, daß** das erste Subsystem (9) für Straßensegmente (C, D), welche das zweite Subsystem (11) bei seiner Erzeugung von zweiten Mauttransaktionen (14) berücksichtigt, keine ersten Mauttransaktionen (13) erzeugt.

2. Verfahren nach Anspruch 1, **dadurch gekennzeichnet, daß** zu seiner Mauttransaktionserzeugung (13) das erste Subsystem (9) eine erste Geodatenbank (15) und das zweite Subsystem (11) eine zweite Geodatenbank (16) von mautpflichtigen Straβensegmenten (B, C, D) verwendet, wobei die erste Geodatenbank (15) nur solche mautpflichtigen Straßensegmente (B) enthält, welche in der zweiten Geodatenbank (16) nicht vorkommen.

3. Verfahren nach Anspruch 1, **dadurch gekennzeichnet, daß** das erste Subsystem (9) und das zweite Subsystem (11) zur Mauttransaktionserzeugung (13, 14) eine gemeinsame Geodatenbank (17) von mautpflichtigen Straßensegmenten (B, C, D) verwenden, in der zu jedem Straßensegment (B, C, D) zumindest ein Flag (18) gespeichert wird, welches die Verfügbarkeit einer lokalen Vermautungsstelle (2) hiefür anzeigt, wobei das erste Subsystem (9) nur dann erste Mauttransaktionen (13) für Fahrzeuggeräte (3) auf einem Straßensegment (B) erzeugt, wenn dessen Flag (18) in der Geodatenbank (17) nicht gesetzt ist.

4. Verfahren nach einem der Ansprüche 1 bis 3, **dadurch gekennzeichnet, daß** für die lokalen Vermautungsstellen (2) des zweiten Subsystems DSRC-Baken (11) verwendet werden.

5. Straßenmautsystem, mit zumindest einem ersten ein Mobilfunksystem (7) umfassenden Subsystem (9) zur erste Mauttransaktionen erzeugenden Verortung von Fahrzeuggeräten (3, 3') mittels globaler Satellitennavigation (6) und zumindest einem zweiten lokale Vermautungsstellen (2) umfassenden Subsystem (11) zur zweite Mauttransaktionen erzeugenden Verortung von Fahrzeuggeräten (3, 3") mittels dieser lokalen Vermautungsstellen (2), wobei zumindest einige Fahrzeuggeräte (3) mit beiden Subsystemen (9, 11) zusammenwirken können und die Subsysteme (9, 11) an eine gemeinsame mauttransaktionsverarbeitende Zentrale (5) angeschlossen sind, **dadurch gekennzeichnet, daß** das erste Subsystem (9) für Straßensegmente (C, D), welche das zweite Subsystem (11) bei seiner Erzeugung von zweiten Mauttransaktionen (14) berücksichtigt, keine ersten Mauttransaktionen (13) erzeugt.

6. Straßenmautsystem nach Anspruch 5, **dadurch gekennzeichnet, daß** zu seiner Mauttransaktionserzeugung (13) sich das erste Subsystem (9) auf eine erste Geodatenbank (15) und das zweite Subsystem (11) auf eine zweite Geodatenbank (16) von mautpflichtigen Straßensegmenten (B, C, D) stützt, wobei die erste Geodatenbank (15) nur solche mautpflichtigen Stra-βensegmente (B) enthält, welche in der zweiten Geodatenbank (16) nicht vorkommen.

7. Straßenmautsystem nach Anspruch 5, **dadurch gekennzeichnet, daß** sich das erste Subsystem (9) und das zweite Subsystem (11) zur Mauttransaktionserzeugung (13, 14) auf eine gemeinsame Geodatenbank (17) von mautpflichtigen Straßensegmenten (B, C, D) stützen, in der zu jedem Straßensegment (B, C, D) zumindest ein Flag (18) gespeichert ist, welches die Verfügbarkeit einer lokalen Vermautungsstelle (2) hiefür anzeigt, wobei das erste Subsystem (9) nur dann erste Mauttransaktionen (13) für Fahrzeuggeräte (3) auf einem Straßensegment (B) erzeugt, wenn dessen Flag (18) in der Geodatenbank (17) nicht gesetzt ist.

8. Straßenmautsystem nach einem der Ansprüche 5 bis 7, **dadurch gekennzeichnet, daß** die lokalen Vermautungsstellen (2) des zweiten Subsystems (11) DSRC-Baken sind.

9. Zentrale für ein Straßenmautsystem nach Anspruch 6 oder 7, enthaltend die gemeinsame (17) bzw. die ersten und zweiten Geodatenbank(en) (15, 16) zur Verteilung an die Subsysteme (9, 11).

10. Proxy (8) in einem ersten Subsystem (9) eines Straßenmautsystems nach Anspruch 6 oder 7 zur Vermittlung zwischen den Fahrzeuggeräten (3, 3') und der Zentrale (5), enthaltend die gemeinsame (17) bzw. die erste Geodatenbank (15) zur mauttransaktionserzeugenden Verortung von ortsmeldenden Fahrzeuggeräten (3, 3'), wobei der Proxy (8) nur dann eine erste Mauttransaktion (13) für ein Straßensegment (B) erzeugt und an die Zentrale (5) sendet, wenn dieses Straßensegment (B) in der ersten Geodatenbank (15) enthalten oder in der gemeinsamen Geodatenbank (17) mit keinem Flag (18) versehen ist.

11. Proxy in einem ersten Subsystem (9) eines Straßenmautsystems nach Anspruch 6 oder 7 zur Vermittlung zwischen den Fahrzeuggeräten (3, 3') und der Zentrale (5), enthaltend zumindest die gemeinsame (17) bzw. die erste Geodatenbank (15) zur Verteilung dieser Geodatenbank (15, 17) an mauttransaktionserzeugende Fahrzeuggeräte (3, 3').

12. Fahrzeuggerät (3) von mauttransaktionserzeugendem Typ für einen Proxy (8) nach Anspruch 11, wobei das Fahrzeuggerät (3) zumindest die gemeinsame (17) bzw. die erste Geodatenbank (15) enthält, und wobei das Fahrzeuggerät (3) nur dann eine erste Mauttransaktion (13) für ein Straßensegment (B) erzeugt und an die Zentrale (5) sendet, wenn dieses Straßensegment (B) in der ersten Geodatenbank (15) enthalten oder in der gemeinsamen Geodatenbank (17) mit keinem Flag (18) versehen ist.

## Claims

1. Method for creating toll transactions (13, 14) in a road toll system, which has at least a first subsystem (9) comprising a mobile radio system (7) for a first toll transactions creating localisation of vehicle devices (3, 3') by means of global satellite navigation (6) and at least a second subsystem (11) comprising local tolling sites (2) for a second toll transactions creating localisation of vehicle devices (3, 3") by means of these local tolling sites (2), wherein at least some vehicle devices (3) can interact with both subsystems (9, 11) and the subsystems (9, 11) can send their toll transactions (13, 14) to a common central station (5) for processing, **characterised in that** the first subsystem (9) does not create first toll transactions (13) for road segments (C, D) which are taken into account by the second subsystem when creating second toll transactions (14).

2. Method according to claim 1, **characterised in that**, for its toll transaction generation (13), the first subsystem (9) uses a first geo-database (15), and the second subsystem (11) uses a second geo-database (16) of tollable road segments (B, C, D), wherein the first geo-database (15) only contains such tollable road segments (B) which do not occur in the second geo-database (16).

3. Method according to claim 1, **characterised in that**, for the toll transaction generation (13, 14), the first subsystem (9) and the second subsystem (11) use a common geo-database (17) of tollable road segments (B, C, D), in which geo-database (17) there is stored at least one flag (18) for each road segment (B, C, D) indicating the availability of a local tolling site (2) therefor, wherein the first subsystem (9) only creates first toll transactions (13) for vehicle devices (3) on a road segment (B) if the flag (18) of the latter is not set in the geo-database (17).

4. Method according to any one of the claims 1 to 3, **characterised in that** DSRC radio beacons (11) are used for the local tolling sites (2) of the second subsystem.

5. Road toll system with at least a first subsystem (9) comprising a mobile radio system (7) for a first toll transactions creating localisation of vehicle devices (3, 3') by means of global satellite navigation (6) and at least a second subsystem (11) comprising local tolling sites (2) for a second toll transactions creating localisation of vehicle devices (3, 3') by means of these local tolling sites (2), wherein at least some vehicle devices (3) can interact with both subsystems (9, 11) and the subsystems (9, 11) are connected to a common central station (5) processing toll transactions, **characterized in that** the first subsystem (9) does not create first toll transactions (13) for road segments (C, D) which are taken into account by the second subsystem (11) when creating second toll transactions (14).

6. Road toll system according to claim 5, **characterised in that** for its toll transaction generation (13), the first subsystem (9) is based on a first geo-database (15), and the second subsystem (11) is based on a second geo-database (16) of tollable road segments (B, C, D), wherein the first geo-database (15) only contains such tollable road segments (B) which do not occur in the second geo-database (16).

7. Road toll system according to claim 5, **characterised in that**, for the toll transaction generation (13, 14), the first subsystem (9) and the second subsystem (11) are based on a common geo-database (17) of tollable road segments (B, C, D), in which geo-database (17) there is stored at least one flag (18) for each road segment (B, C, D) indicating the availability of a local tolling site (2) therefor, wherein the first subsystem (9) only creates first toll transactions (13) for vehicle devices (3) on a road segment (B) if the flag (18) of the latter is not set in the geo-database (17).

8. Road toll system according to any one of the claims 5 to 7, **characterised in that** the local tolling sites (2) of the second subsystem (11) are DSRC radio beacons (11).

9. Central station for a road toll system according to claim 6 or 7, comprising the common (17) or the first and second geo-database/s (15, 16) for distribution to the subsystems (9, 11).

10. Proxy (8) in a first subsystem (9) of a road toll system according to claim 6 or 7 for relaying between vehicle devices (3, 3') and the central station (5), comprising the common (17) or the first geo-database (15), respectively, for a toll transactions creating localisation of vehicle devices (3, 3') signalling their location, wherein the proxy (8) only creates a first toll transaction (13) for a road segment (B) and sends it to the central station (5) if this road segment (B) is comprised in the first geo-database (15) or is not provided with a flag in the common geo-database (17).

11. Proxy in a first subsystem (9) of a road toll system according to claim 6 or 7 for relaying between vehicle devices (3, 3') and the central station (5), comprising the common (17) or the first geo-database (15), respectively, for distributing this geo-database (15, 17) to vehicle devices (3, 3') generating toll transactions.

12. Vehicle device (3), of a type creating toll transactions, for a proxy (8) according to claim 11, wherein the vehicle device (3) comprises at least the common (17) or the first geo-database (15), respectively, and wherein the vehicle device (3) only creates a first toll transaction (13) for a road segment (B) and sends it to the central station (5) if this road segment (B) is contained in the first geo-database (15) or is not provided with a flag (18) in the common geo-database (17).

## Revendications

1. Procédé pour la production de transactions de péage (13, 14) dans un système de péage routier, comportant au moins un premier sous-système (9) comprenant un système radio cellulaire (7) pour une localisation, qui produit des premières transactions de péage, d'appareils de véhicule (3, 3'), au moyen d'une navigation par satellite globale (6), et au moins un deuxième sous-système (11) comprenant des postes de péage locaux (2) pour une localisation, qui produit des deuxièmes transactions de péage, d'appareils de véhicule (3, 3"), au moyen de ces postes de péage locaux (2), dans lequel procédé au moins quelques appareils de véhicule (3) peuvent coopérer avec les deux sous-systèmes (9, 11), et les sous-systèmes (9, 11) envoient leurs transactions de péage (13, 14) à une centrale commune (5) pour un traitement, **caractérisé en ce que** le premier sous-système (9) ne produit pas de première transactions de péage (13) pour des segments routiers (C, D) considérés par le deuxième sous-système (11) lors de sa production de deuxièmes transactions de péage (14).

2. Procédé selon la revendication 1, **caractérisé en ce que** pour sa production de transactions de péage (13), le premier sous-système (9) emploie une première base de géodonnées (15) et le deuxième sous-système (11) emploie une deuxième base de géodonnées (16) de segments routiers à péage (B, C, D), dans lequel la première base de géodonnées (15) ne contient que des segments routiers (B) n'apparaissant pas dans la deuxième base de géodonnées (16).

3. Procédé selon la revendication 1, **caractérisé en ce que** le premier sous-système (9) et le deuxième sous-système (11) emploient une base de géodonnées commune (17) de segments routiers à péage (B, C, D) pour la production de transactions de péage (13, 14), dans laquelle base au moins un indicateur (18) est enregistré pour chaque segment routier à péage (B, C, D), lequel indicateur indiquant la disponibilité d'un poste de péage local (2) à cette fin, le premier sous-système (9) ne produisant des premières transactions de péage (13) pour des appareils de véhicule (3) sur un segment routier (B) que lorsque son indicateur (18) n'est pas mis dans la base de géodonnées (17).

4. Procédé selon l'une des revendications 1 à 3, **caractérisé en ce que** des balises DSRC (11) sont utilisées pour les postes de péage locaux (2) du deuxième sous-système.

5. Système de péage routier avec au moins un premier sous-système (9) comprenant un système radio cellulaire (7) pour une localisation, qui produit des premières transactions de péage, d'appareils de véhicule (3, 3') au moyen d'une navigation par satellite globale (6), et au moins un deuxième sous-système (11) comprenant des postes de péage locaux (2) pour une localisation, qui produit des premières transactions de péage, d'appareils de véhicule (3, 3") au moyen de ces postes de péage locaux (2), dans lequel au moins quelques appareils de véhicule (3) peuvent coopérer avec les deux sous-systèmes (9, 11), et les sous-systèmes (9, 11) sont reliés à une centrale commune de traitement de transactions de péage (5), **caractérisé en ce que** le premier sous-système (9) ne produit pas de premières transactions de péage (13) pour des segments routiers (C, D) considérés par le deuxième sous-système (11) lors de sa production de deuxièmes transactions de péage (14).

6. Système de péage routier selon la revendication 5, **caractérisé en ce que** pour sa production de transactions de péage (13), le premier sous-système (9) s'appuie sur une première base de géodonnées (15) et le deuxième sous-système (11) s'appuie sur une deuxième base de géodonnées (16) de segments routiers à péage (B, C, D), dans lequel la première base de géodonnées (15) ne contient que des segments routiers à péage (B) n'apparaissant pas dans la deuxième base de géodonnées (16).

7. Système de péage routier selon la revendication 5, **caractérisé en ce que** pour la production de transactions de péage (13, 14), le premier sous-système (9) et le deuxième sous-système (11) s'appuient sur une base de géodonnées commune (17) de segments routiers à péage (B, C, D), dans laquelle au moins un indicateur (18) est enregistré pour chaque segment routier à péage (B, C, D), lequel indicateur indiquant la disponibilité d'un poste de péage local (2) à cette fin, le premier sous-système (9) ne produisant des premières transactions de péage (13) pour des appareils de véhicule (3) sur un segment routier (B) que lorsque leur indicateur (18) n'est pas mis dans la base de géodonnées (17).

8. Système de péage routier selon l'une des revendications 5 à 7, **caractérisé en ce que** les postes de péage locaux (2) du deuxième sous-système (11) sont des balises DSRC.

9. Centrale pour un système de péage routier selon la revendication 6 ou 7, contenant la base de géodonnées commune (17) ou les première et deuxième base/s de géodonnées (15, 16), pour la distribution aux sous-systèmes (9, 11).

10. Proxy (8) dans un premier sous-système (9) d'un système de péage routier selon la revendication 6 ou 7, pour la médiation entre les appareils de véhicule (3, 3') et la centrale (5), contenant la base de géodonnées commune (17) ou la première base de géodonnées (15), pour la localisation d'appareils de véhicule (3, 3') indicateurs de lieu produisant des transactions de péage, le proxy (8) ne produisant une première transaction de péage (13) pour un segment routier (B) et ne l'envoyant à la centrale (5) que lorsque ce segment routier (B) est contenu dans la première base de géodonnées (15) ou exempt d'indicateur (18) dans la base de géodonnées commune (17).

11. Proxy dans un premier sous-système (9) d'un système de péage routier selon la revendication 6 ou 7, pour la médiation entre les appareils de véhicule (3, 3') et la centrale (5), contenant au moins la base de géodonnées commune (17) ou la première base de géodonnées (15) en vue de la distribution de cette base de géodonnées (15, 17) à des appareils de véhicule (3, 3') produisant des transactions de péage.

12. Appareil de véhicule (3) du type produisant des transactions de péage, pour un proxy (8) selon la revendication 11, dans lequel l'appareil de véhicule (3) contient au moins la base de géodonnées commune (17) ou la première base de géodonnées (15), et dans lequel l'appareil de véhicule (3) ne produit une première transaction de péage (13) pour un segment routier (B) et ne l'envoie à la centrale (5) que lorsque ce segment routier (B) est contenu dans la première base de géodonnées (15) ou exempt d'indicateur (18) dans la base de géodonnées commune (17).
